# EUROPÄISCHE PATENTSCHRIFT

(11) **EP 2 387 485 B1**
(45) Veröffentlichungstag und Bekanntmachung des Hinweises auf die Patenterteilung: **26.03.2014**
(21) Anmeldenummer: 09796706.1
(22) Anmeldetag: 17.12.2009
(51) Int. Cl.: B25B 21/00, B25B 23/14, B25F 5/00, F16D 7/08, B23B 45/00, F16D 7/04, F16H 35/10

(54) **WERKZEUGMASCHINE, INSBESONDERE HANDGEHALTENE WERKZEUGMASCHINE**
MACHINE TOOL, IN PARTICULAR HANDHELD MACHINE TOOL
MACHINE-OUTIL, EN PARTICULIER MACHINE-OUTIL PORTATIVE

(30) Priorität: 16.01.2009 DE 102009000267; 12.11.2009 DE 102009046663
(43) Veröffentlichungstag der Anmeldung: 23.11.2011
(60) Teilanmeldung: 13167489.7
(73) Patentinhaber: Robert Bosch GmbH, 70442 Stuttgart (DE)
(72) Erfinder: HECHT, Joachim, 71106 Magstadt (DE); ROEHM, Heiko, 70176 Stuttgart (DE); KRAUS, Martin, 70794 Filderstadt (DE)
(86) Internationale Anmeldenummer: PCT/EP2009/067400
(87) Internationale Veröffentlichungsnummer: WO 2010/081609

(56) Entgegenhaltungen:
- EP-A1- 0 787 931
- DE-A1- 2 829 291
- DE-A1- 3 720 633
- DE-A1-102004 058 809
- GB-A- 2 124 112

## Beschreibung

Die Erfindung bezieht sich auf eine Werkzeugmaschine, insbesondere eine handgehaltene Werkzeugmaschine, nach dem Oberbegriff des Anspruches 1. Eine derartige Handwerkzeugmaschine ist beispielsweise aus EP 0 787 931 A1, GB 2 124 112 A, DE 37 20 633 A1 und DE 28 29 291 A bekannt.

### Stand der Technik

Bekannt sind solche Werkzeugmaschinen als handgehaltene Maschinen in Form von Akku-Schraubem aus der DE 10 2004 058 809 A1. Bei diesen wird über einen mehrstufigen Planetentrieb eine Werkzeugaufnahme angetrieben. Im Übergang auf die Werkzeugaufnahme ist eine Drehmomentenbegrenzungseinheit vorgesehen, über die der Kraftfluss zwischen Motor und Werkzeugaufnahme unterbrochen wird, wenn das übertragene Drehmoment einen vorgegebenen, eingestellten Wert übersteigt. Die Drehmomentenbegrenzungseinheit arbeitet verrastend mithilfe einer Federabstützung, die den Planetenträger des Planetentriebes in einer Drehlage zum Gehäuse im normalen Betrieb fixiert. Erst wenn das auf die Werkzeugaufnahme zu übertragende Drehmoment einen eingestellten Grenzwert überschreitet, wird der Planetenträger freigegeben und damit der Kraftfluss auf die Werkzeugaufnahme unterbrochen.

Bei dieser bekannten Lösung erstreckt sich die Rastabstützung umschließend zum Planetentrieb und die Federabstützung erfolgt mithilfe von Schraubenfedern, die ihrerseits lagefest zum Gehäuse abgestützt sind und axial im Übergang auf einen radial auskragenden Rand des Planetenträgers aneinander anschließende Rastscheiben beaufschlagen, die gegeneinander verrastend drehfest festgelegt sind, solange der für das Drehmoment als Maximalwert vorgegebene Grenzwert nicht überschritten wird. Wird der Grenzwert überschritten, so wird die verrastende Verbindung zwischen den Rastscheiben durch axialen Versatz derselben aufgehoben und die Drehmomentenübertragung auf die Werkzeugaufnahme unterbrochen. Insgesamt führt eine derartige Ausgestaltung der Rastaufnahme mit umschließender Anordnung zum Planetentrieb bei axialer Überdeckung desselben zu einer zwar geschlossenen Bauform für die Drehmomentenbegrenzungseinheit, aber auch zu einer Bauform der Werkzeugmaschine, die deren Einsatzspektrum einschränkt.

Bei einer weiteren bekannten Lösung arbeitet die Drehmomentenbegrenzungseinheit mit einer zum Hohlrad des Planetentriebes axial liegenden Federabstützung, über die Rastkörper gegen eine Stirnseite des Hohlrades verrastend angedrückt werden.

### Offenbarung der Erfindung

Hiervon ausgehend liegt der Erfindung die Aufgabe zugrunde, insbesondere durch Verkürzung der Drehmomentenbegrenzungseinheit eine geringere Baulänge der Werkzeugmaschine zu ermöglichen.

Diese Aufgabe wird erfindungsgemäß mit den Merkmalen des Anspruches 1 gelöst. Die Unteransprüche geben zweckmäßige Weiterbildungen an.

Bei der erfindungsgemäßen Lösung werden die Rastkörper und die Federabstützung radial versetzt zueinander angeordnet, liegen also in radialer Richtung nebeneinander, wobei bevorzugt die Rastkörper an Teilen des Planetentriebes, insbesondere am Hohlrad oder Planetenträger, abgestützt sind. Dies macht es möglich, eine Federabstützung mit zumindest einem Federelement zu verwenden, das über ein Überbrückungsglied in Richtung auf die Rastkörper radial versetzt zu diesen abgestützt ist, bei bevorzugter stirnseitiger Abstützung gegen die Ringwand des Hohlrades oder den Planetenträger. Ein im Aufbau axial kurzer Planetentrieb wird so mit einer axial kurz bauenden Rastabstützung kombiniert, die je nach radialer Lage der Rastkörper zur Federabstützung die Verwendung verhältnismäßig langer Federelemente ermöglicht, wie auch eine Anordnung der Federelemente, die zu einem schlanken Aufbau der Drehmomentenbegrenzungseinheit führt. Insbesondere ist es so auch möglich, Federelemente, sei es in Form von Ringfedern, Ringfederpaketen, vor allem aber auch Schraubenfedern zu verwenden, deren Länge größer ist als der Abstand zwischen der Druckfläche des Stützgliedes, das bevorzugt längs eines gehäuseseitigen Gewindes verstellbar ist, und der seitens der Rastkörper vorgesehenen Druckfläche. Ferner ist es auch möglich, das gehäuseseitige Gewinde für das insbesondere als Druckmutter ausgebildete Stützglied axial in Flucht zu den Rastkörpern, insbesondere etwa deren Mittenkreis vorzusehen. Erreicht wird dadurch insgesamt eine kurze Baulänge der Drehmomentenbegrenzungseinheit, insbesondere deren Kupplungsteiles einschließlich Verrastung und Stützglied. Ferner lassen sich so kurze Toleranzketten und steife Geometrien bei einer prozesssicheren Verriegelungsfunktion erreichen und dies bei reduziertem Teileumfang, wenn zur Führung der Federelemente, insbesondere der Schraubenfedern, das Getriebegehäuse mit herangezogen wird, so dass auch bei langen Schraubenfedern ohne großen Führungsaufwand eine Federausknickung verhindert wird.

Sowohl bei radial nach außen wie auch nach radial innen versetzt angeordneten Federabstützungen sind diese bevorzugt konzentrisch zu den Rastkörpern angeordnet, wobei der Radialversatz über ein Überbrückungsglied überbrückt wird, das als Ring mit zwischen Federelementen und Rastkörpern radial verlaufenden Schenkeln versehen ist, so dass eine radiale Überbrückung ungeachtet dazwischenliegender Gehäuseteile möglich ist, und damit auch die axiale Abstützung der Rastkörper in Form von Rastkugeln oder Rastbolzen gegen die Stirnseite der Ringwand des Hohlrades oder den Planetenträger, selbst wenn die Federabstützung teilweise in radialer Überlappung zum Hohlrad verläuft.

Insbesondere im Hinblick auf eine schlanke Gestaltung des auf die Werkzeugaufnahme auslaufenden Endes der Werkzeugmaschine erweist es sich als zweckmäßig, wenn die Federabstützung zu den Rastkörpern radial nach innen versetzt angeordnet ist, wobei für eine solche Lösung insbesondere von Vorteil ist, wenn mit axial kurzen Federelementen, insbesondere auch Ringfedern oder Ringfederpaketen gearbeitet wird. Zudem ermöglicht eine solche sehr kurz bauende Lösung auch eine besonders einfache Gestaltung der Führung der Feder und des Überbrückungsgliedes.

Die Erfindung betrifft des Weiteren eine Drehmomentenbegrenzungseinheit für Werkzeugmaschinen als solche und ermöglicht einen sehr kompakten und auch konstruktiv sowie fertigungstechnisch gut zu beherrschenden Aufbau derselben. Weitere Vorteile und zweckmäßige Ausführungen sind den Ansprüchen, der Figurenbeschreibung und den Zeichnungen zu entnehmen. Es zeigen:
- Fig. 1: eine stark schematisierte Darstellung einer Handwerkzeugmaschine mit aus einem Antriebsmotor, Getriebe und Spindel zur Werkzeugaufnahme bestehendem Antriebsstrang,
- Fig. 2 und 3: stark vereinfachte, schematisierte Teildarstellungen des auf die Spindel zur Werkzeugaufnahme auslaufenden Getriebebereiches mit in diesem Getriebebereich angeordneter Drehmomentenbegrenzungseinheit,
- Fig. 4: einen vereinfachten Längsschnitt des auf die Werkzeugaufnahme auslaufenden vorderen Getriebebereiches,
- Fig. 5: eine Ansicht des Getriebebereiches gemäß Fig. 4 in Perspektive, wobei wie in Fig. 4 das umschließende Maschinengehäuse nicht gezeigt ist,
- Fig. 6: eine der Fig. 4 entsprechende Darstellung einer weiteren Ausführungsform,
- Fig. 7: eine Teilansicht zur Darstellung gemäß Fig. 6, und
- Fig. 8: eine den Darstellungen gemäß Fig. 2 und 3 entsprechende Schemadarstellung, in der als von den Rastkörpern beaufschlagtes Teil des Planetentriebes der Planetenträger vorgesehen ist, wobei in der linken Hälfte der Darstellung, analog zu Fig. 2, die Federabstützung in radial nach außen versetzter Lage zu den Rastkörpern veranschaulicht ist, und in der rechten Hälfte der Darstellung, analog zu Fig. 3, in radial nach innen versetzter Lage.

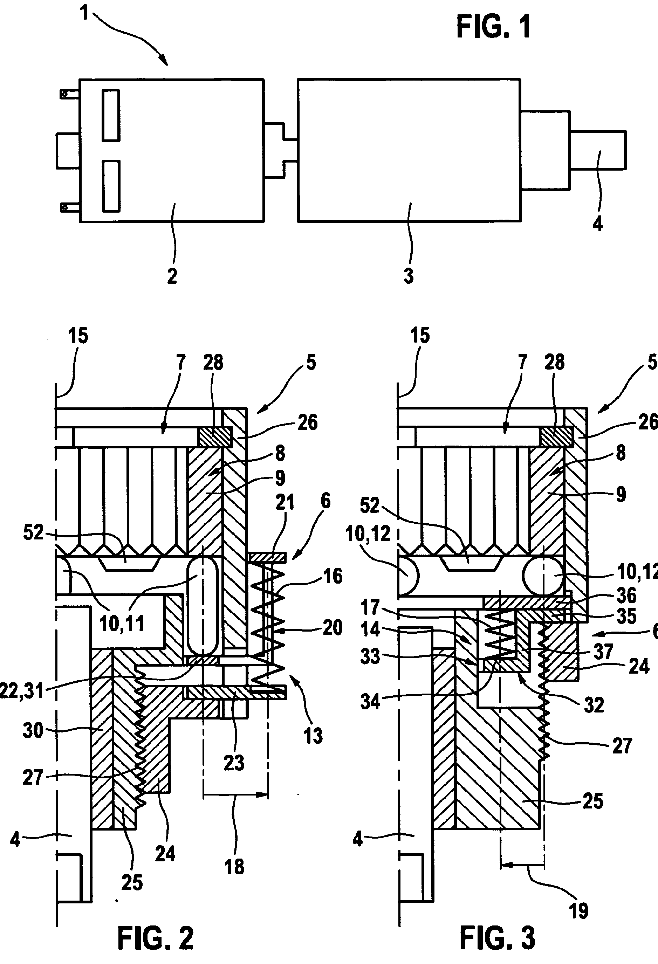

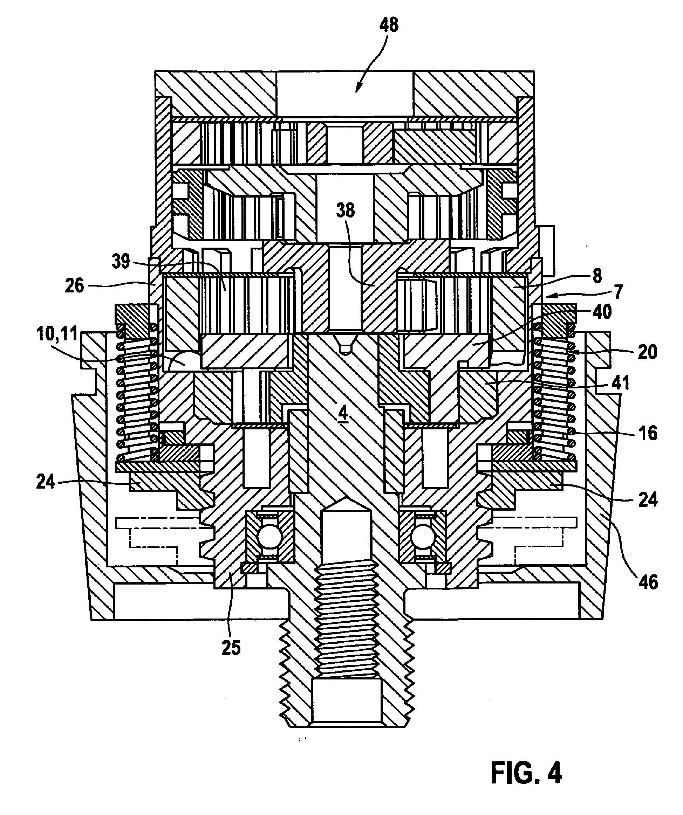

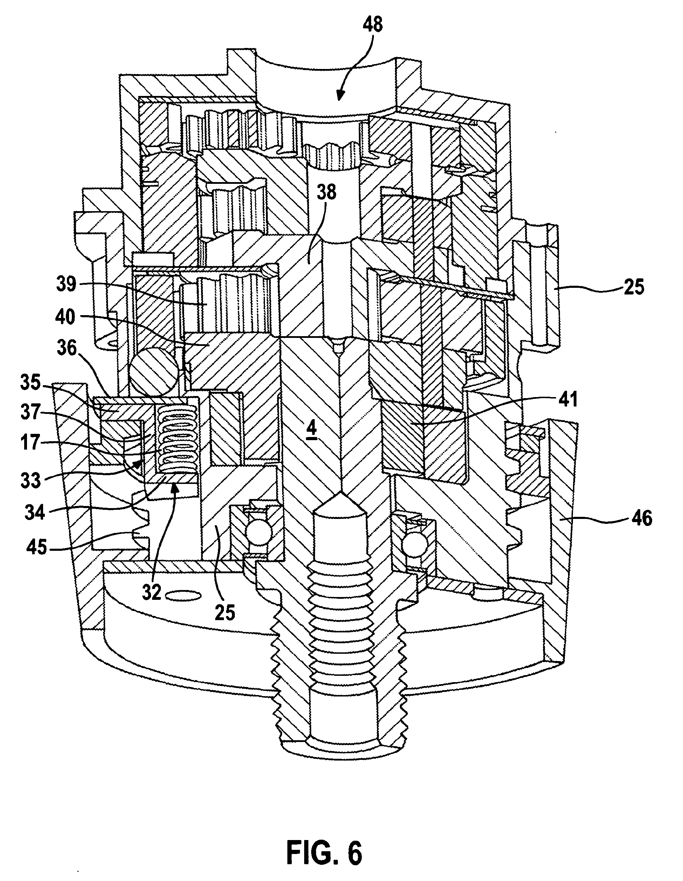

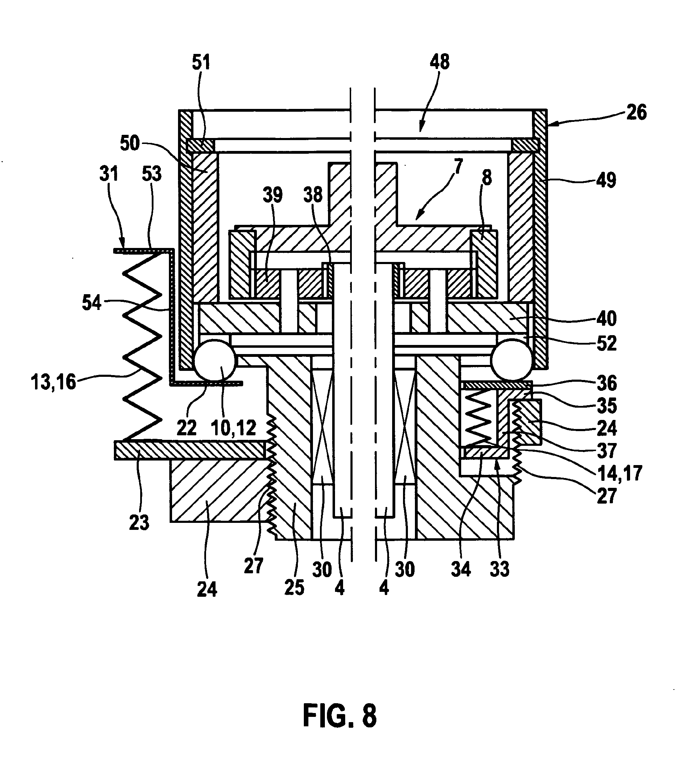

In Fig. 1 ist stark schematisiert eine Werkzeugmaschine 1 in ihrem Grundaufbau als elektrisch angetriebene, handgehaltene Werkzeugmaschine dargestellt, wie sie beispielsweise als Akku-Bohrer oder Akku-Schrauber benutzt wird. Die wesentlichen Bauelemente dieser Werkzeugmaschine 1 sind der Antriebsmotor 2, eine Getriebe 3 sowie eine über das Getriebe 3 angetriebene Spindel 4, über die der Antrieb des nicht dargestellten Werkzeuges erfolgt, das in üblicher Weise in einem spindelseitigen Futter aufgenommen ist. Über das Getriebe 3 wird die Drehzahl des Antriebsmotors 2 in die für den praktischen Betrieb meist geforderte, niedrigere Antriebsdrehzahl für das Werkzeug übersetzt. Das Getriebe 2 ist - siehe Fig. 4 und 6, wobei Fig. 6 eine nicht erfindungsgemäße Lösung zeigt - insbesondere als Planetentrieb 48 ausgebildet, bevorzugt mehrstufig und umschaltbar gestaltet und läuft im Übergang zur Spindel 4 auf eine Drehmomentenbegrenzungseinheit 5 aus, die insbesondere bezüglich ihrer Rastabstützung 6 in vereinfachten Teildarstellungen aus den Fig. 2 und 3 sowie, korrespondierend hierzu, aus Fig. 8 ersichtlich ist, wobei Fig. 6 und Fig. 8, rechte Hälfte eine nicht erfindungsgemäße Lösung zeigen.

Die Fig. 4 und 6, wobei Fig. 6 eine nicht erfindungsgemäße Lösung zeigt, lassen den mehrstufigen Aufbau des als Planetentrieb 48 gestalteten Getriebes 3 erkennen, der nachfolgend nur bezüglich seiner letzten, eingangsseitig zur Drehmomentenbegrenzungseinheit 5 liegenden Getriebestufe 7 näher erläutert wird, die in diesen Darstellungen bezüglich ihres Hohlrades 8 Teil der Rastabstützung 6 ist.

In den Fig. 2 und 3, wobei Fig. 3 eine nicht erfindungsgemäße Lösung zeigt, ist von dieser letzten Getriebestufe 7 als Teil der Rastabstützung 6 jeweils nur das Hohlrad 8 gezeigt, dessen Ringwand 9 stirnseitig mit Rastnocken 52 versehen ist, die mit Rastkörpern 10 zusammenwirken. Als Rastkörper 10 sind in Fig. 2 Rastbolzen 11 und in der nicht erfindungsgemäßen Fig. 3 Rastkugeln 12 vorgesehen, die jeweils über eine Federabstützung 13 gemäß Fig. 2 und 14 gemäß der nicht erfindungsgemäßen Fig. 3 axial, vorliegend parallel zur Getriebeachse 15 gegen die Stirnseite der Ringwand 9 des Hohlrades 8 angedrückt sind.

Die Federabstützungen 13 und 14 weisen jeweils Federelemente 16, 17 auf, die im Ausführungsbeispiel als Schraubenfedern über den Umfang des Hohlrades 8 mit Abstand zueinander liegend verteilt angeordnet sind. Die Federelemente 16, 17 können jeweils auch durch Einzelfedern oder Federpaare anderen Aufbaus gebildet sein, und es können anstelle einer Mehrzahl von über den Umfang verteilt angeordneten Federelementen 16, 17 auch Ringfedern, gegebenenfalls auch Ringfederpakete Verwendung finden.

Gemeinsam ist in der erfindungsgemäßen Ausgestaltung der Drehmomentenbegrenzungseinheit 5 gemäß Fig. 2 und 3, wobei Fig. 3 eine nicht erfindungsgemäße Lösung zeigt, die radial versetzte Anordnung der Federabstützungen 13, 14 mit ihren Federelementen 16, 17 zu den Rastkörpern 10 in ihrer Ausbildung als Rastbolzen 11 oder Rastkugeln 12. In Fig. 2 sind die jeweiligen Federelemente 16 der Federabstützung 13 radial nach außen gegenüber den durch die Rastbolzen 11 gebildeten Rastkörpern 10 versetzt angeordnet und dieser Versatz ist in Fig. 2 durch den Pfeil 18 veranschaulicht. Fig. 3 zeigt einen prinzipiell entsprechenden, nicht erfindungsgemäßen Aufbau, aber mit einem Versatz der Federabstützung 14 mit dem Federelement 17 gegenüber den durch die Rastkugeln 12 gebildeten Rastkörpern 10 nach radial innen, veranschaulicht durch den Pfeil 19.

Aus Fig. 2 ist für die dort gezeigte Konstruktion mit zum Rastkörper 10 radial nach außen versetzter Federabstützung 13 ersichtlich, dass die Federelemente 16 jeweils auf einem Federträger 20 angeordnet sind, der ringförmig umschließend zu den Rastkörpern 10 verläuft und im radialen Überdeckungsbereich zu den Rastkörpern 10 in Achsrichtung 15 verlaufende Federstützen 21 aufweist, zu denen fußseitig radial nach innen ragende Stützschenkel 22 vorgesehen sind, auf denen die Rastkörper 10 gegenüberliegend zur Stirnseite der Ringwand 9 des Hohlrades 8 anliegen. Die Federstützen 21 und die Stützschenkel 22 bilden somit im Wesentlichen winkelförmige Überbrückungsglieder 31, die in Umfangsrichtung ringförmig verbunden sind.

Fußseitig ist das jeweilige auf einer Federstütze 21 gehaltene und kopfseitig abgestützte Federelement 16 in seinem über den Federträger 20 in der Zeichnung nach unten, das heißt in Gegenrichtung zum Hohlrad 8 hinausragenden Bereich auf einer ringförmigen Federführung 23 abgestützt, die ihrerseits von einem in Achsrichtung verstellbaren und die Funktion einer Druckmutter übernehmenden Stützglied 24 getragen ist. Das Stützglied 24 ist an einem Gehäuseteil 25 des umschließend zum Hohlrad 8 vorgesehenen Getriebegehäuses 26 angeordnet und über eine Gewindeverbindung 27 in Richtung der Achse 15 zum Gehäuse 26 axial verstellbar. Hierdurch wird der axiale Abstand zwischen der ringförmigen Federführung 23 und dem Federträger 20 verändert, auf dessen Federstützen 21 die Federelemente 16 gegenüberliegend abgestützt sind. Damit ist durch axiale Verstellung des Stützgliedes 24 mit der Federführung 23 zur Federabstützung 13 die axiale Vorspannung zu bestimmen, mit der die Rastkörper 10 gegen die Stirnseite des Hohlrades 8 anliegen, das axial gegenüberliegend zu den Rastkörpern 10 gegen das Getriebegehäuse 26 abgestützt ist, was im Ausführungsbeispiel über einen in eine Ringnut des Gehäuses 26 eingreifenden Spannring 28 veranschaulicht ist. Im Getriebegehäuse 26, in der zeichnerischen Darstellung gemäß Fig. 2 gegenüber dessen Gehäuseteil 25, ist auch die Spindel 4 gelagert, die mit einer Werkzeugaufnahme versehen oder mit einer Werkzeugaufnahme verbunden ist und die gegenüber dem Gehäuseteil 25 über ein Lager 30, insbesondere ein Gleitlager abgestützt ist.

Fig. 2 veranschaulicht, dass durch die Axialverstellung des Stützgliedes 24 nicht nur die Vorspannkraft der Rastabstützung 6 einstellbar ist, sondern die Rastabstützung 6 letztlich auch blockiert werden kann, wenn das Stützglied 24 gegen den Stützschenkel 22 anliegt und somit eine direkte Abstützung vom Stützglied 24 über die Rastkörper 10 zum Hohlrad 8 gegeben ist, über die das Hohlrad 8 blockiert ist.

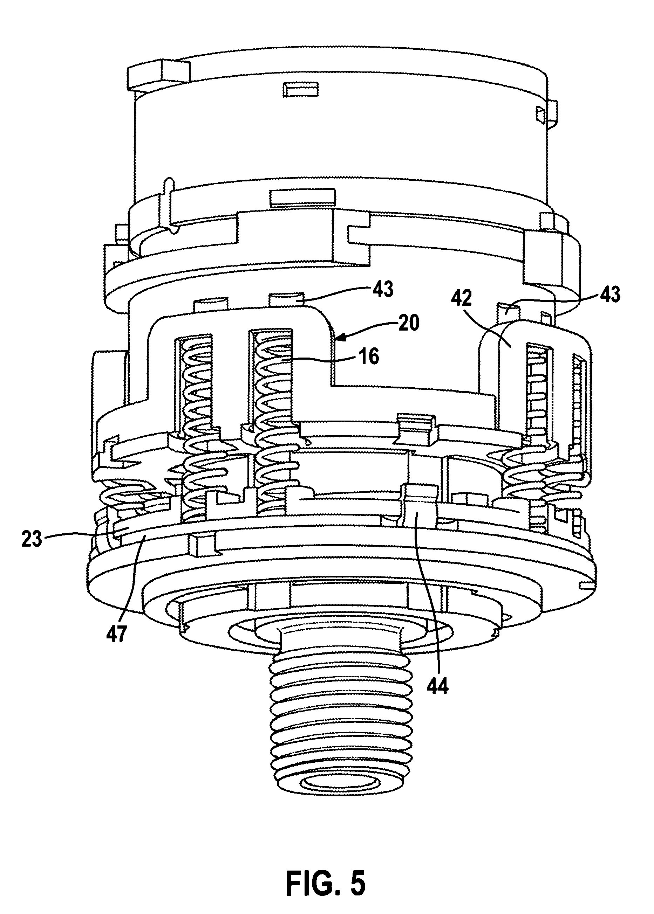

Erkennbar ist aus Fig. 2 auch, dass die Federführung 23 axial verschieblich, aber drehfest zum Getriebegehäuse 26 festgelegt ist, was bezüglich des Federträgers 20, wie in Fig. 5 angedeutet, unter anderem dadurch zu erreichen ist, dass dieser mit seinen über die Federstützen 21 getragenen Federn 16 in Führungsvertiefungen 43 des Getriebegehäuses 26 liegt und/oder dass für die Rastkörper 10 seitens des Gehäuses 26 entsprechende Axialführungen vorgesehen sind, was nicht gezeigt ist.

Eine der Fig. 2 in der Funktion weitgehend entsprechende, nicht erfindungsgemäße Lösung zeigt Fig. 3, die sich prinzipiell allerdings durch den radialen Versatz der Federabstützungen 14 mit den Federelementen 17 gegenüber den Rastkörpern 10 nach radial innen, im Gegensatz zu Fig. 2 nach radial außen, unterscheidet.

Ist bei der Ausgestaltung gemäß Fig. 2 die Federabstützung 13 durch einen Federträger 20 mit axial verlaufenden Federstützen 21 und radial verlaufenden Stützschenkeln 22 als Überbrückungsgliedern 31 ausgebildet, so ist bei der nicht erfindungsgemäßen Ausgestaltung gemäß Fig. 3 die Federabstützung 14 durch einen ringförmigen Federträger 32 als Überbrückungsglied 33 gestaltet, das, nach radial innen ragend, das Federelement 17 untergreifende Stützschenkel 34 und einen nach radial außen ragenden Kragschenkel 35 aufweist, wobei die Stützschenkel 34 und der Kragschenkel 35 axial gegeneinander versetzt sind und der ringförmige Kragschenkel 35 gegen einen Tragring 36 abgestützt ist, der zum Gehäuse 26 drehfest festgelegt ist und auf dem gegenüberliegend zum Kragschenkel 35 die Rastkörper 10 abgestützt sind. Auf den Tragring 36 ist radial nach innen gegenüber dem Kragschenkel 35 versetzt das jeweilige Federelement 17 abgestützt, das so zwischen dem Tragring 36 und dem Stützschenkel 34 axial eingespannt ist. Gegen den Kragschenkel 35 stützt sich axial das Stützglied 24 ab, analog zu Fig. 2, das auf dem Gehäuseteil 25 axial über eine Gewindeverbindung 27 verstellbar angeordnet ist und das bevorzugt wiederum durch eine Druckmutter gebildet ist.

Dargestellt ist in der nicht erfindungsgemäßen Fig. 3 eine Situation, in der die Drehmomentenbegrenzungseinheit 5 auf Block gefahren und somit außer Funktion gesetzt ist, indem über das Stützglied 24, über den dazwischen liegenden Kragschenkel 35 und den Tragring 36 der Rastkörper 10 derart gegen die Stirnwand des Hohlrades 8 verrastend angedrückt ist, dass eine drehfeste Verbindung gegeben ist. Wird das Stützglied 24 aus dieser Position in der nicht erfindungsgemäßen Fig. 3 nach unten verfahren, - hierfür dient der Stellring 46, siehe Fig. 4 und 6, wobei Fig. 6 eine nicht erfindungsgemäße Lösung zeigt - so wird der Rastkörper 10 mit einer lediglich durch die Kraft des Federelementes 17 bestimmten Spannkraft beaufschlagt, so dass über die axiale Lage des Stützgliedes 24 ein jeweiliger Grenzwert für die Drehmomentenbegrenzungseinheit 5 eingestellt werden kann. Dies veranschaulicht Fig. 2.

Bei der Ausgestaltung gemäß der nicht erfindungsgemäßen Fig. 3 weist das Überbrückungsglied 33 jeweils im Querschnitt Z-förmige Grundform auf, bei radial nach innen ragenden Stützschenkeln 34 und jeweils über axial verlaufende Stege 37 mit den Stützschenkeln 34 verbundenem Kragschenkel 35, wobei die Stützschenkel 34 jeweils in Überdeckung zu Federelementen 17 liegen.

Einen den Schemadarstellungen gemäß Fig. 2 und 3 entsprechenden Aufbau des auf die Werkzeugaufnahme auslaufenden, vorderen Teil des Getriebes 3 mit zugeordneter Drehmomentenbegrenzungseinheit 5 zeigen die Fig. 4 und 5 in Entsprechung zu Fig. 2, sowie 6 und 7 in Entsprechung zu Fig. 3, wobei die Fig. 3, 6 und 7 nicht erfindungsgemäße Lösungen zeigen. Es finden insoweit die jeweils gleichen Bezugszeichen Verwendung, so dass sich anhand dieser Bezugszeichen und der Funktionsbeschreibung zu den Fig. 2 und 3 der entsprechende Aufbau erkennen lässt.

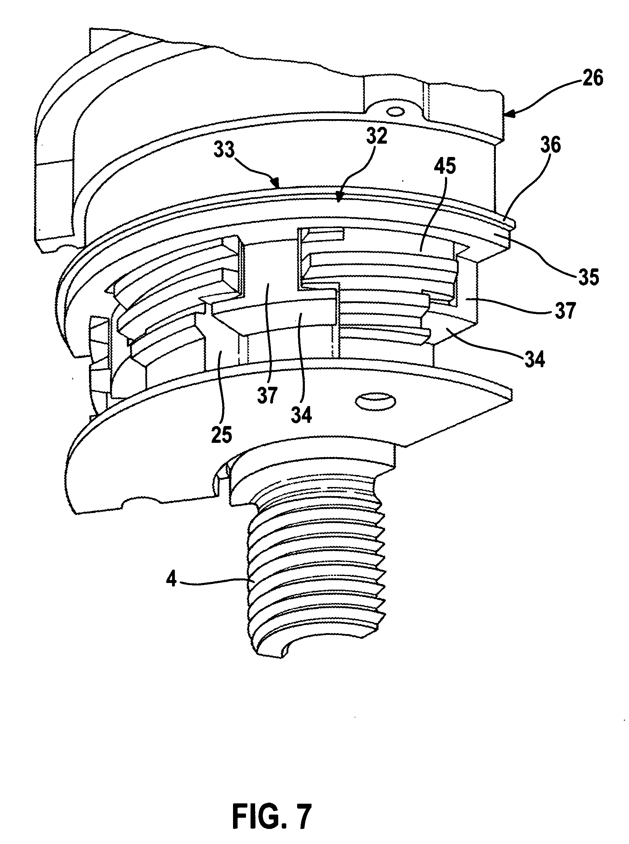

Ergänzend ergibt sich aus den Fig. 4 bis 7, wobei die Fig. 6 und 7 nicht erfindungsgemäße Lösungen zeigen, der Aufbau der mit seinem Hohlrad 8 der Drehmomentenbegrenzungseinheit 5 zugehörigen Getriebestufe, deren zentrales Sonnenrad 38 mit Planetenrädern 39 eines Planetenträgers 40 kämmt, der mit einem Abtriebsstem 41 und über diesen mit der Spindel 4 drehfest verbunden ist.

Weiter veranschaulicht Fig. 5 eine praktisch zweckmäßige Ausgestaltung der Federabstützung 13 mit paarweiser Anordnung von Federelementen 16 in gehäuseartigen Aufnahmen 42, die zumindest weitgehend die seitliche Führung der Federelemente 16 übernehmen und somit ein Ausknicken derselben verhindern. Zumindest gegen das Getriebegehäuse 26 kann diese Führung auch durch das Getriebegehäuse 26 selbst gebildet sein, das hierfür zweckmäßigerweise mit entsprechenden Führungsvertiefungen 43, insbesondere rinnenförmigen Führungsvertiefungen 43 versehen ist, wodurch sich auch in Umfangsrichtung eine Abstützung zwischen der Federabstützung 13 und dem Getriebegehäuse 26 ergibt. Ferner veranschaulicht Fig. 5, dass die ringförmige Federführung 23 axial angelegt an den Federträger 20 gegen diesen über Rasthaken 44 verhakbar und damit zu einer die Federelemente 16 gespannt einschließenden Einheit zu verbinden ist. Die Rasthaken 44 sind an einer untergreifend zur Federführung 23 liegenden Scheibe 47 angeordnet.

Aus den nicht erfindungsgemäßen Fig. 6 und 7 ist ergänzend zu der nicht erfindungsgefäßen Fig. 3 insbesondere der Aufbau des Überbrückungsgliedes 33 in Z-Form ersichtlich, und zwar mit seinem ringförmigen Kragschenkel 35, der auf dem Tragring 36 aufsitzt, ferner mit seinem vom ringförmigen Kragschenkel 35 ausgehenden, axial verlaufenden Steg 37 und seinen radial nach innen einspringenden Stützschenkeln 34, auf denen jeweils die Feder 17 - in Fig. 7 nicht ersichtlich - abgestützt ist. Für das Stützglied 24 ist das untere Gehäuseteil 25 im Überdeckungsbereich zu den Stegen 37 mit einem Gewinde 45 versehen.

Bei den in Fig. 8 in weiterer Vereinfachung dargestellten Ausführungsbeispielen, von denen die rechte Hälfte eine nicht erfindungsgemäße Lösung zeigt und zu deren Erläuterung weitgehend auf die bisher schon verwendeten Bezugszeichen zurückgegriffen wird, sind in die als Rastkugeln 12 dargestellten Rastkörper 10 seitens des mit seiner letzten Getriebestufe 7 veranschaulichten Planetentriebes 48 nicht, wie anhand der Fig. 2 bis 7 gezeigt, gegen das Hohlrad 8, sondern gegen den Planetenträger 40 des Planetentriebes 48 abgestützt. Der Planetenträger 40 ragt in dieser Darstellung radial über das Hohlrad 8 hinaus und erstreckt sich bis nahe an eine Umfangswand 49 des Getriebegehäuses 26, gegen die er axial gegenüberliegend zu den Rastkörpern 10 abgestützt ist. Die Abstützung ist über eine Abstützhülse 50 veranschatilicht, die axial über einen Sicherungsring 51 zur Umfangwand 49 festgelegt ist.

Der Planetenträger 40 treibt über das Sonnenrad 38 die Spindel 4 an, die über das Lager 30 im auf die nicht dargestellte Werkzeugaufnahme auslaufenden Gehäuseteil 25 gelagert ist. Längs dieses Gehäuseteils 25 ist das Stützglied 24 verstellbar über das das Federelement 16 bzw. 17 der jeweiligen Federabstützung 13 bzw. 14 hinsichtlich der Stützkraft einstellbar ist, mit der der jeweilige Rastkörper 10 gegen den mit Rastnocken 52 versehenen Planetenträger 40 abgestützt ist.

In Fig. 8 linksseitig liegt die Federabstützung 13 radial nach außen gegen die Rastkörper 10 versetzt, während rechtsseitig die radial nach innen versetzte Lage der Federabstützung 14 zu dem Rastkörper 10 veranschaulicht ist, analog zu den Darstellungen in Fig. 2 und 3.

Bezogen auf die linksseitig gezeigte, nach radial außen versetzte Federabstützung 13 ist deren Federelement 16 zwischen einer ringförmigen, auf dem Stützglied 24 aufliegenden Federführung 23 und einem nur schematisch dargestellten Überbrückungsglied 31 eingespannt, das einen radial, die Rastkörper 10 untergreifenden Stützschenkel 22 und einen axial hierzu versetzt im Übergriffsbereich zur Umfangswand 49 des Gehäuses 26 liegenden, radial nach außen auskragenden Tragschenkel 53 aufweist, so dass sich in Verbindung mit einem zwischen dem Stützglied 24 und dem Tragschenkel 53 verlaufenden, sich axial erstreckenden Stegteil 54 eine im Querschnitt Z-förmige Kontur des ringförmigen Überbrückungsgliedes 31 ergibt Eine solche Ausgestaltung ermöglicht, wie auch schon anhand der Fig. 2 erläutert, lange Federwege, wobei eine etwa notwendige Führung des Federelementes in nicht dargestellter Weise dem Überbrückungsglied 31 zugeordnet sein kann, das sich mit seinem Stegteil 54 axial in Überdeckung zur dargestellten Getriebestufe erstrecken kann.

Die nicht erfindungsgemäße Fig. 8 rechtsseitig zeigt bei gleichem Grundaufbau, analog zu der nicht erfindungsgemäßen Fig. 3, die radial nach innen versetzte Lage der Federabstützung 14 zu den Rastkörpern 10, wobei auch hier das Überbrückungsglied 33 als Ringkörper mit Z-förmigem Querschnitt gestaltet ist. Dieser weist im Übergang auf die Rastkörper 10 einen radial nach außen ragenden Kragschenkel 35 und einen radial nach Innen ragenden Stützschenkel 34 auf, von denen der Stützschenkel 34 gegenüber dem Kragschenkel 35 nach der von den Rastkörpern 10 abgewandten Seite axial abgesetzt ist, so dass sich, radial nach innen versetzt zu den Rastkörpern 10, längs des den Kragschenkel 35 mit dem Stützschenkel 34 verbindenden Steges 37 ein geschützter Aufnahmeraum für das in diesem angeordnete Federelement 17 oder die in diesem angeordneten Federelemente 17 ergibt. Zweckmäßigerweise ist zwischen den Rastkörpern 10 und dem Kragschenkel 35 ein Tragring 36 angeordnet, was es möglich macht, zumindest den Kragschenkel 35 des ringförmigen Überbrückungsgliedes 33 auch segmentiert auszubilden. Insgesamt ermöglicht eine derartige Lösung einen besonders gedrungenen Aufbau, der sich insbesondere auch für Federelemente 17 in Ringform eignet.

## Patentansprüche

1. Werkzeugmaschine, insbesondere handgehaltene Werkzeugmaschine, mit einer Getriebeachse (15) und einer im Antrieb ihrer Werkzeugspindel (4) liegende, in einem Gehäuseteil (25) aufgenommene Drehmomentenbegrenzungseinheit (5), deren Auslösemoment über eine axiale Rastabstützung (6) einstellbar ist, welche zumindest eine Rastkörper (10) beaufschlagende Federabstützung (13) mit zumindest einem Federelement (16) aufweist und über ein in Richtung der Getriebeachse (15) verstellbares Stützglied (24) gehäuseseitig abgestützt ist, **dadurch gekennzeichnet, dass** die Rastkörper (10) und das zumindest eine Federelement (16) der Federabstützung (13) in Bezug auf die Getriebeachse (15) radial versetzt und axial überlappend zueinander liegen.

2. Werkzeugmaschine nach Anspruch 1, **dadurch gekennzeichnet, dass** das zumindest eine Federelement (16) der Federabstützung (13) über ein Überbrückungsglied (31) auf die radial versetzt liegenden Rastkörper (10) abgestützt ist.

3. Werkzeugmaschine nach Anspruch 2, **dadurch gekennzeichnet, dass** das Überbrückungsglied (31) als Ring mit zwischen dem zumindest einen Federelement (16) und den Rastkörpern (10) radial verlaufenden Schenkeln (22) ausgebildet ist.

4. Werkzeugmaschine nach einem der vorhergehenden Ansprüche, **dadurch gekennzeichnet, dass** die Drehmomentenbegrenzungseinheit (5) einen Planetentrieb (48) umfasst und dass die Rastkörper (10) gegen einen Teil des Planetentriebes (48), insbesondere dessen Hohlrad (8) oder dessen Planetenträger (40) abgestützt sind.

5. Werkzeugmaschine nach einem der vorhergehenden Ansprüche, **dadurch gekennzeichnet, dass** das zumindest eine Federelement (16) der Federabstützung (13) zu den Rastkörpern (10) radial nach außen versetzt angeordnet ist.

6. Werkzeugmaschine nach einem der vorhergehenden Ansprüche, **dadurch gekennzeichnet, dass** die Federabstützung (13) durch einen Federträger (20) mit axial verlaufenden Federstützen (21) und radial verlaufenden Stützschenkeln (22) gebildet wird.

7. Werkzeugmaschine nach Anspruch 6, **dadurch gekennzeichnet, dass** die Federstützen (21) und die Stützschenkeln (22) im Wesentlichen winkelförmige Überbrückungsglieder (31) bilden, die in Umfangsrichtung ringförmig verbunden sind.

8. Werkzeugmaschine nach einem der vorhergehenden Ansprüche, **dadurch gekennzeichnet, dass** die Federabstützung (13) eine Federführung (23) zur kopfseitigen Abstützung des zumindest einen Federelements (16) aufweist, wobei die Federführung (23) an dem Stützglied (24) abgestützt ist.

9. Werkzeugmaschine nach Anspruch 8, **dadurch gekennzeichnet, dass** die Federführung (23) axial verschieblich, aber drehfest zu einem Getriebegehäuse (26) festgelegt ist.

10. Werkzeugmaschine nach einem der Ansprüche 8 oder 9, **dadurch gekennzeichnet, dass** die Federführung (23) angelegt an den Federträger (20) gegen den Federträger (20) über Rasthaken (44) verhakbar und zu einer das zumindest eine Federelement (16) gespannt einschließenden Einheit zu verbinden ist.

11. Werkzeugmaschine nach einem der vorhergehenden Ansprüche, **dadurch gekennzeichnet, dass** die zu den Rastkörpern (10) radial nach außen versetzt angeordnete Federabstützung (13) mit ihrem Federträger (20) insbesondere auf einem Kreisring um die Rastkörper (10) liegt und das Überbrückungsglied (31) zumindest einen vom Federträger (20) radial nach innen ragenden, in der Abstützung zu den Rastkörpern (10) liegenden Stützschenkel (22) aufweist sowie über das zumindest eine Federelement (16) fußseitig gegen eine zum Stützglied (24) abgestützte Federführung (23) abgestützt ist.

12. Werkzeugmaschine nach Anspruch 11, **dadurch gekennzeichnet, dass** der Federträger (20) außenseitig zum den Planetentrieb (48) umschließenden Gehäuseteil (25) angeordnet ist.

13. Werkzeugmaschine nach einem der vorhergehenden Ansprüche, **dadurch gekennzeichnet, dass** als Federelemente (16) zumindest eine Ringfeder oder Schraubenfeder vorgesehen sind, und dass die Federlänge der Federelemente (16) in eingebautem Zustand größer ist als der Abstand der Druckfläche des Stützgliedes (24) zu einer den Rastkörpern (10) zugeordnete Druckfläche der Drehmomentenbegrenzungseinheit (5).

14. Werkzeugmaschine nach einem der vorhergehenden Ansprüche, **dadurch gekennzeichnet, dass** das Stützglied (24) als Druckmutter ausgebildet ist, deren Gewindeverbindung (27) zum Gehäuse (25) axial in Flucht zu den Rastkörpern (10), insbesondere etwa deren Mittenkreis, liegt.

## Claims

1. Machine tool, in particular handheld machine tool, with a gearing axis (15) and a torque-limiting unit (5) which is located in the drive of the tool spindle (4) of said machine tool, is accommodated in a housing part (25) and the triggering moment of which is adjustable via an axial latching support assembly (6) which has at least one spring support assembly (13) which acts upon latching bodies (10), has at least one spring element (16) and is supported on the housing side via a support member (24) which is adjustable in the direction of the gearing axis (15), **characterized in that** the latching bodies (10) and the at least one spring element (16) of the spring support assembly (13) lie radially offset with respect to the gearing axis (15) and so as to overlap one another axially.

2. Machine tool according to Claim 1, **characterized in that** the at least one spring element (16) of the spring support assembly (13) is supported on the latching bodies (10), which lie radially offset, via a bridging member (31).

3. Machine tool according to Claim 2, **characterized in that** the bridging member (31) is designed as a ring with legs (22) running radially between the at least one spring element (16) and the latching bodies (10).

4. Machine tool according to one of the preceding claims, **characterized in that** the torque-limiting unit (5) comprises a planetary drive (48), and **in that** the latching bodies (10) are supported against a part of the planetary drive (48), in particular the ring gear (8) thereof or the planet carrier (40) thereof.

5. Machine tool according to one of the preceding claims, **characterized in that** the at least one spring element (16) of the spring support assembly (13) is arranged offset radially outwards with respect to the latching bodies (10).

6. Machine tool according to one of the preceding claims, **characterized in that** the spring support assembly (13) is formed by a spring carrier (20) with axially running spring supports (21) and radially running support legs (22).

7. Machine tool according to Claim 6, **characterized in that** the spring supports (21) and the support legs (22) form substantially angular bridging members (31) which are connected annularly in the circumferential direction.

8. Machine tool according to one of the preceding claims, **characterized in that** the spring support assembly (13) has a spring guide (23) for the head-end support of the at least one spring element (16), wherein the spring guide (23) is supported on the support member (24).

9. Machine tool according to Claim 8, **characterized in that** the spring guide (23) is fixed in an axially displaceable but non-rotatable manner with respect to a gearing housing (26).

10. Machine tool according to either of Claims 8 and 9, **characterized in that** the spring guide (23), placed onto the spring carrier (20), can be hooked against the spring carrier (20) via latching hooks (44) and can be connected to form a unit enclosing the at least one spring element (16) in a tensioned manner.

11. Machine tool according to one of the preceding claims, **characterized in that** the spring support assembly (13), which is arranged offset radially outwards with respect to the latching bodies (10), lies with the spring carrier (20) thereof around the latching bodies (20) in particular on a circular ring, and the bridging member (31) has at least one supports leg (22) which protrudes radially inwards from the spring carrier (20) and lies in the support assembly with respect to the latching bodies (10), and is supported at the foot end via the at least one spring element (16) against a spring guide (23) which is supported with respect to the support member (24).

12. Machine tool according to Claim 11, **characterized in that** the spring carrier (20) is arranged on the outside with respect to the housing part (25) surrounding the planetary drive (48).

13. Machine tool according to one of the preceding claims, **characterized in that** at least one annular spring or helical spring is provided as spring elements (16), and **in that** the spring length of the spring elements (16) in the fitted state is greater than the distance of the pressure surface of the support member (24) from a pressure surface of the torque-limiting unit (5), which pressure surface is assigned to the latching bodies (10).

14. Machine tool according to one of the preceding claims, **characterized in that** the support member (24) is designed as a pressure nut, the threaded connection (27) of which with respect to the housing (25) is axially aligned with the latching bodies (10), in particular approximately with the centre circle thereof.

## Revendications

1. Machine-outil, en particulier machine-outil portative, pourvue d'un arbre de transmission (15) et d'une unité (5) de limitation de couple située dans l'entraînement de sa broche d'outil (4) et reçue dans une partie de boîtier (25), le couple de déclenchement de l'unité de limitation de couple pouvant être réglé au moyen d'un appui d'encliquetage (6) axial qui comprend au moins un appui à ressorts (13) sollicitant des corps d'encliquetage (10) et pourvu d'au moins un élément ressort (16), et qui est supporté côté boîtier au moyen d'un organe d'appui (24) déplaçable en direction de l'arbre de transmission (15), **caractérisée en ce que** les corps d'encliquetage (10) et l'au moins un élément ressort (16) de l'appui à ressorts (13) sont situés de manière décalée radialement par rapport à l'arbre de transmission (15) et en chevauchement axial les uns par rapport aux autres.

2. Machine-outil selon la revendication 1, **caractérisée en ce que** l'au moins un élément ressort (16) de l'appui à ressorts (13) est supporté, au moyen d'un organe de pontage (31), sur les corps d'encliquetage (10) situés de manière décalée radialement.

3. Machine-outil selon la revendication 2, **caractérisée en ce que** l'organe de pontage (31) est réalisé sous forme d'anneau pourvu de branches (22) s'étendant radialement entre l'au moins un élément ressort (16) et les corps d'encliquetage (10).

4. Machine-outil selon l'une quelconque des revendications précédentes, **caractérisée en ce que** l'unité (5) de limitation de couple comporte un engrenage planétaire (48) et **en ce que** les corps d'encliquetage (10) s'appuient contre une partie de l'engrenage planétaire (48), en particulier de sa couronne (8) ou de son porte-satellites (40).

5. Machine-outil selon l'une quelconque des revendications précédentes, **caractérisée en ce que** l'au moins un élément ressort (16) de l'appui à ressorts (13) est disposé de manière décalée radialement vers l'extérieur par rapport aux corps d'encliquetage (10).

6. Machine-outil selon l'une quelconque des revendications précédentes, **caractérisée en ce que** l'appui à ressorts (13) est formé par un support de ressorts (20) pourvu de sièges de ressort (21) s'étendant axialement et de branches d'appui (22) s'étendant radialement.

7. Machine-outil selon la revendication 6, **caractérisée en ce que** les sièges de ressort (21) et les branches d'appui (22) forment des organes de pontage (31) essentiellement angulaires qui sont reliés en forme d'anneau dans la direction périphérique.

8. Machine-outil selon l'une quelconque des revendications précédentes, **caractérisée en ce que** l'appui à ressorts (13) comprend un guide de ressorts (23) pour l'appui côté tête de l'au moins un élément ressort (16), le guide de ressorts (23) s'appuyant contre l'organe d'appui (24).

9. Machine-outil selon la revendication 8, **caractérisée en ce que** le guide de ressorts (23) est fixé de manière déplaçable axialement mais solidaire en rotation par rapport à un boîtier de transmission (26).

10. Machine-outil selon l'une quelconque des revendications 8 et 9, **caractérisée en ce que** le guide de ressorts (23) peut être accroché au moyen de crochets d'encliquetage (44) contre le support de ressorts (20), de manière appliquée contre le support de ressorts (20), et doit être relié pour former une unité renfermant de manière serrée l'au moins un élément ressort (16).

11. Machine-outil selon l'une quelconque des revendications précédentes, **caractérisée en ce que** l'appui à ressorts (13) disposé de manière décalée radialement vers l'extérieur par rapport aux corps d'encliquetage (10) se situe, avec son support de ressorts (20), en particulier sur un anneau circulaire autour des corps d'encliquetage (10), et l'organe de pontage (31) comprend au moins une branche d'appui (22) faisant saillie radialement vers l'intérieur à partir du support de ressorts (20) et se situant dans l'appui par rapport aux corps d'encliquetage (10) et s'appuie côté de base, au moyen de l'au moins un élément ressort (16), contre un guide de ressorts (23) supporté par rapport à l'organe d'appui (24).

12. Machine-outil selon la revendication 11, **caractérisée en ce que** le support de ressorts (20) est disposé du côté extérieur par rapport à la partie de boîtier (25) entourant l'engrenage planétaire (48).

13. Machine-outil selon l'une quelconque des revendications précédentes, **caractérisée en ce qu'**au moins un anneau-ressort ou un ressort hélicoïdal est prévu en tant qu'élément ressort (16), et **en ce que** la longueur des éléments ressort (16) est, à l'état monté, supérieure à la distance entre la surface de pression de l'organe d'appui (24) et une surface de pression, associée aux corps d'encliquetage (10), de l'unité (5) de limitation de couple.

14. Machine-outil selon l'une quelconque des revendications précédentes, **caractérisée en ce que** l'organe d'appui (24) est réalisé sous forme d'écrou de pression dont le raccord fileté (27) se situe, par rapport au boîtier (25), axialement en alignement par rapport aux corps d'encliquetage (10), en particulier approximativement par rapport à leur cercle médian.
